# EUROPÄISCHE PATENTSCHRIFT

(11) **EP 2 450 671 B1**
(45) Veröffentlichungstag und Bekanntmachung des Hinweises auf die Patenterteilung: **03.06.2015**
(21) Anmeldenummer: 11188164.5
(22) Anmeldetag: 08.11.2011
(51) Int. Cl.: G01D 5/22

(54) **Weggeber**
Distance transmitter
Indicateur de trajectoire

(30) Priorität: 09.11.2010 DE 102010043637
(43) Veröffentlichungstag der Anmeldung: 09.05.2012
(73) Patentinhaber: EBE Elektro-Bau-Elemente GmbH, 70771 Leinfelden-Echterdingen (DE)
(72) Erfinder: Dilger, Stefan, 78166 Donaueschingen (DE)
(74) Vertreter: BRP Renaud & Partner mbB Rechtsanwälte Patentanwälte Steuerberater

(56) Entgegenhaltungen:
- EP-A1- 0 348 259
- EP-A1- 2 172 683
- US-A1- 2004 222 801

## Beschreibung

Die Erfindung bezieht sich auf einen Weggeber gemäß dem Oberbegriff des Anspruchs 1.

Ein derartiger Weggeber ist aus der EP 0 348 259 A1 bekannt und besitzt einen zwischen stationären Spulen einer Differentialdrosselanordnung angeordneten elektrisch leitfähigen Geberkörper, sowie eine Auswerteschaltung, die auf die von der Lage des Geberkörpers wiedergegebene Signal erzeugt. Ein ähnlicher Weggeber wird in der US 2004/222801 dargestellt.

Es ist grundsätzlich erwünscht, bei Weggebern eine sehr hohe Messgenauigkeit zu erreichen.

Diese Aufgabe wird bei einem Weggeber der eingangs angegebenen Art durch die Merkmale des Kennzeichens des Anspruchs 1 gelöst.

Dabei nutzt die Erfindung die Kenntnis, dass die Empfindlichkeit der Auswerteschaltung und damit die Messgenauigkeit des Weggebers deutlich erhöht werden können, wenn die Spulen mit einer hochfrequenten Wechselspannung beaufschlagt werden, denn die durch den Geberkörper verursachten Impedanzänderungen werden bei hochfrequenter Beaufschlagung der Spulen besonders deutlich.

Des Weiteren ist bei der Erfindung vorgesehen, dass die Drosselspulen elektrisch in einer Reihenschaltung angeordnet sind, die beim Betrieb mit einer hochfrequenten Rechteckspannung beaufschlagt wird, so dass zwischen den Drosselspulen hochfrequente Wechselspannungsimpulse abgreifbar sind, wobei die Auswerteschaltung eine Differenz zwischen Spannungshüben aufeinanderfolgender Impulse auswertet und in eine Weganzeige umsetzt.

Schließlich ist bei der Erfindung ist vorgesehen, die Spannungshübe jeweils mit vorgegebener Verzögerung gegenüber der positiven bzw. negativen Startflanke der aufeinanderfolgenden Wechselspannungsimpulse zu erfassen. Dadurch erübrigt es sich, die außerordentlich hohen Amplituden der Wechselspannungsimpulse zu ermitteln, vielmehr wird ein charakteristischer Wert an der Abfallflanke der jeweiligen Impulse ermittelt. Dies ist messtechnisch mit hoher Genauigkeit und in einfacher Weise durchführbar.

Im Ergebnis werden also Differenzen zwischen charakteristischen Punkten der Abfallflanken der Spannungsimpulse ausgewertet. Dabei besteht gemäß einer bevorzugten Ausführungsform der Erfindung die Möglichkeit, jeweils einen Mittelwert über eine vorgegebene Anzahl der ermittelten Differenzen zu bilden. Da die Spannungshübe die gleiche Frequenz wie die die Drosselspulen beaufschlagende hochfrequente Wechselspannung aufweisen, kann die Mittelwertbildung über vergleichsweise viele Differenzen erfolgen, gleichwohl wird noch eine hohe Signalfrequenz für die Anzeige der Auswerteschaltung erreicht.

Im Übrigen wird hinsichtlich bevorzugter Merkmale der Erfindung auf die Ansprüche und die nachfolgende Erläuterung der Zeichnung verwiesen, anhand der eine besonders bevorzugte Ausführungsform der Erfindung näher erläutert wird.

Schutz wird nicht nur für angegebene oder dargestellte Merkmalskombinationen sondern auch für prinzipiell beliebige Kombinationen der angegebenen oder dargestellten Einzelmerkmale beansprucht.

In der Zeichnung zeigt
- Fig. 1: eine schematisierte Darstellung des erfindungsgemäßen Weggebers,
- Fig. 2: einen schematisierten Schaltplan des erfindungsgemäßen Weggebers bzw. seiner Auswerteschaltung und
- Fig. 3: Diagramme der an Schaltungspunkten A, B und C anliegenden bzw. abgreifbaren elektrischen Spannungen.

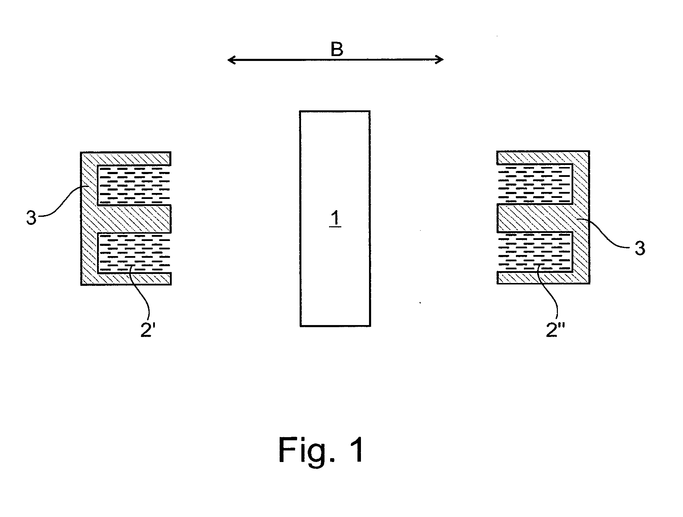

Gemäß Fig. 1 sind beidseitig eines elektrisch leitenden Geberkörpers 1, der in Richtung des Doppelpfeiles B beweglich ist, stationäre Drosselspulen 2' und 2", vorzugsweise gleichachsig zueinander, angeordnet. Diese Drosselspulen sind jeweils in topfartigen Gehäusen 3 untergebracht, die einander mit ihren Öffnungen zugewandt sind. An den Böden der Gehäuse 3 ist jeweils ein die zugeordneten Spule bis zur freien Stirnseite axial durchsetzender stabförmiger Spulenkern angeformt. Diese Gehäuse bestehen aus einem magnetisierbaren Material, beispielsweise Ferrit-Material.

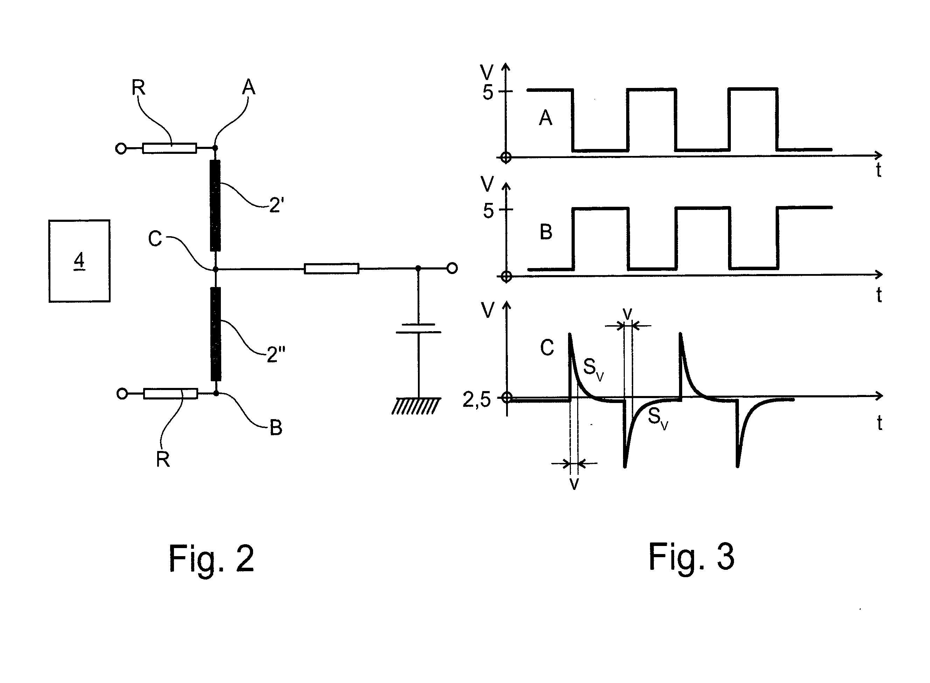

Gemäß Fig. 2 sind die Anschlüsse A und B einer von den Drosselspulen 2' und 2" gebildeten Reihenschaltung mit einem Hochfrequenzgenerator 4 verbunden, der die Anschlüsse A und B jeweils mit einer hochfrequenten Rechteck-Wechselspannung beaufschlagt. Dabei ist die am Anschluss B anliegende hochfrequente Rechteck-Wechselspannung gegenüber der am Anschlusspunkt A anliegenden Rechteck-Wechselspannung bei gleicher Frequenz, z.B. 50 kHz, um eine halbe Wellenlänge verschoben. Am Anschlusspunkt C zwischen den Drosselspulen 2' und 2" ist eine ausgeprägt impulsförmige hochfrequente Wechselspannung abgreifbar, deren Frequenz der Frequenz der an den Anschlusspunkten A und B anliegenden hochfrequenten Rechteck-Wechselspannung entspricht. Wenn der Geberkörper 1 eine Mittellage einnimmt, haben die positiven und negativen Amplituden der bei C abgreifbaren Wechselspannung gleiche Absolutwerte. Bei Verstellung des Geberkörpers 1 aus der Mittellage ergeben sich dann stark unterschiedliche Größenverhältnisse.

Messtechnisch ist nun erfindungsgemäß vorgesehen, anstelle der wegen ihrer Größe schwer erfassbaren Amplituden der Impulse die Spannungswerte Sᵥ zu erfassen, die nach einer Verzögerungszeit v nach der jeweiligen Startflanke des jeweiligen Impulses vorliegen. Nunmehr wird die Differenz zwischen den Spannungswerten Sᵥ von zeitlich aufeinanderfolgenden Impulsen entgegengesetzter Polarität gebildet, um ein Signal für den Verschiebeweg des Geberkörpers 1 zu erzeugen.

Dies kann messtechnisch durch einen bei C eingangsseitig angeschlossenen Analog-Digital-Wandler erfolgen, der zur Erfassung der Startflanken der positiven bzw. negativen Impulse vom Hochfrequenzgenerator 4 Signale erhält, die die Zeitpunkte der Rechteckflanken der hochfrequenten Rechteck-Wechselspannung wiedergeben. Diese Zeitpunkte entsprechen den Zeitpunkten der Startflanken der Wechselspannungsimpulse am Anschlusspunkt C. Wenn nun der Analog-Digital-Wandler die Spannungswerte Sᵥ jeweils mit vorgegebener Zeitverzögerung nach den Zeitsignalen des Hochfrequenzgenerators 4 für die Rechteckflanken ermittelt und die entsprechenden Differenzen bildet, wird gleichzeitig die Möglichkeit geboten, eine vorgegebene Anzahl nacheinander ermittelter Differenzen einer Mittelwertbildung und/oder einer Summation zu unterziehen. Beispielsweise können bei einer Frequenz des Hochfrequenzgenerators von 50 kHz jeweils 1.000 zeitlich aufeinanderfolgende Differenzwerte für eine Mittelwertbildung oder Summation herangezogen werden, gleichwohl folgen dann die Mittelwerte bzw. die Summenwerte mit einer Frequenz mit 50 kHz aufeinander so dass Wegänderungen des Geberkörpers 1 mit entsprechend hoher Signalfrequenz (50 Hz) erfasst werden.

Durch eine Summation aufeinanderfolgender Differenzen bzw. aufeinanderfolgender Mittelwerte kann die Empfindlichkeit der Auswertung bei noch hinreichender Signalfrequenz erhöht werden.

Die Drosselspulen 2' und 2" können an einer Platine angeordnet sein, die alle für die Auswertung der Signale notwendigen elektrischen Bauteile trägt. Diese Platine kann in prinzipiell beliebiger Weise an einem Maschinenbauteil befestigt werden, welches seinerseits relativbeweglich gegenüber einem benachbarten Maschinenbauteil ist, das seinerseits den Geberkörper 1 trägt. Auf diese Weise können zwischen den Maschinenbauteilen wirksame Kräfte bzw. Drehmomente mit höchster Genauigkeit und geringem messtechnischen Aufwand ermittelt werden.

Gegebenenfalls kann der Geberkörper 1 auch nach Art eines einseitig eingespannten Balkens ausgebildet und angeordnet sein, wobei das freie Ende des eingespannten Balkens zwischen den Drosselspulen 2' und 2" beweglich ist. Auf diese Weise lassen sich Belastungen des Balkens etwa in einer Wiegeanordnung sehr genau ermitteln.

Bei allen Ausführungsformen ist vorteilhaft, dass die Auswerteschaltung jederzeit neu geeicht werden kann, so dass im Verlaufe längerer Zeitspannen auftretende "schleichende" Lageänderungen des Geberkörpers "ausgeblendet" werden können.

Die Erfindung kann Lageänderungen des Geberkörpers 1 im Nanometerbereich erfassen.

## Patentansprüche

1. Weggeber mit einem relativ beweglichen Geberkörper (1) und einer damit zusammenwirkenden Nehmer- bzw. Auswerteschaltung, die ein vom Weg bzw. von der Lage des Geberkörpers (1) abhängiges Ausgangssignal erzeugt, wobei der elektrisch leitfähige Geberkörper (1) zwischen stationären Spulen einer Differentialdrosselanordnung angeordnet ist und die Auswerteschaltung auf die von der Lage des Geberkörpers abhängige Impedanz der Drosselspulen reagiert,
**dadurch gekennzeichnet,**
**dass** die Drosselspulen (2',2") elektrisch in einer Reihenschaltung angeordnet sind, die beim Betrieb mit einer hochfrequenten Rechteckspannung beaufschlagt wird, so dass zwischen den Drosselspulen hochfrequente Wechselspannungsimpulse abgreifbar sind, und dass die Auswerteschaltung eine Differenz zwischen Spannungshüben aufeinanderfolgender Impulse auswertet und in eine Weganzeige umsetzt, wobei
die Spannungshübe jeweils mit vorgegebener Verzögerung gegenüber der positiven bzw. negativen Startflanke der aufeinanderfolgenden Spannungsimpulse erfasst werden.

2. Weggeber nach Anspruch 1,
**dadurch gekennzeichnet,**
**dass** zur Erzeugung des Wegsignals jeweils ein Mittelwert und/oder eine Summe über eine vorgegebene Anzahl der ermittelten Differenzen gebildet wird.

3. Weggeber nach einem der Ansprüche 1 und 2,
**dadurch gekennzeichnet,**
**dass** der Geberkörper (1) mit kraftabhängiger Beweglichkeit relativ zu den Drosselspulen (2',2") angeordnet ist.

4. Weggeber nach einem der Ansprüche 1 bis 3,
**dadurch gekennzeichnet,**
**dass** die Drosselspulen (2',2") jeweils in topfartigen Gehäusen (3) aus magnetisierbarem Material und mit einem am Topfboden angeformten, die jeweilige Spule (2',2") axial durchsetzenden Spulenkern angeordnet und die Topföffnungen einander zugewandt sind.

5. Weggeber nach Anspruch 4,
**dadurch gekennzeichnet,**
**dass** die topfartigen Gehäuse (3) aus Ferritmaterial bestehen.

6. Weggeber nach einem der Ansprüche 1 bis 5,
**dadurch gekennzeichnet,**
**dass** die Drosselspulen (2',2") gleichachsig zueinander angeordnet sind.

7. Weggeber nach einem der Ansprüche 1 bis 6,
**dadurch gekennzeichnet,**
**dass** der Geberkörper (1) in Richtung der Spulenachsen beweglich ist.

## Claims

1. A displacement sensor with a relatively movable sensor body (1) and a pick-up or analysis circuit interacting therewith, which generates an output signal dependent on the path or the position of the sensor body (1), wherein the electrically conductive sensor body (1) is arranged between stationary coils of a differential throttle arrangement and the analysis circuit reacts to the impedance of the throttle coils dependent on the position of the sensor body,
**characterised**
**in that** the throttle coils (2', 2") are electrically arranged in a series circuit, which are loaded with a high frequency rectangular voltage during operation, so that high frequency AC voltage pulses can be tapped between the throttle coils, and in that the analysis circuit analyses a difference between voltage excursions of successive pulses and converts it into a path indicator, wherein
the voltage excursions are in each case detected with a predetermined delay with respect to the positive or negative rising edge of successive voltage pulses.

2. The displacement sensor according to claim 1,
**characterised**
**in that** in each case an average value and/or a sum is formed over a predetermined number of detected differences for generating the displacement signal.

3. The displacement sensor according to one of claims 1 and 2,
**characterised**
**in that** the sensor body (1) is arranged with a force-dependent movability relatively to the throttle coils (2', 2").

4. The displacement sensor according to one of claims 1 to 3,
**characterised**
**in that** the throttle coils (2', 2") are in each case arranged in pot-like housings (3) made from magnetisable material and with a coil core formed on the pot base and axially penetrating the respective coil (2', 2") and the pot openings face one another.

5. The displacement sensor according to claim 4,
**characterised**
**in that** the pot-like housings (3) consist of ferrite material.

6. The displacement sensor according to one of claims 1 to 5,
**characterised**
**in that** the throttle coils (2', 2") are arranged coaxially with respect to one another.

7. The displacement sensor according to one of claims 1 to 6,
**characterised**
**in that** the sensor body (1) is movable in the direction of the coil axes.

## Revendications

1. Indicateur de trajectoire avec un corps d'émetteur (1) mobile de manière relative et un circuit de récepteur ou d'analyse coopérant avec celui-ci, lequel génère un signal de sortie dépendant de la trajectoire ou de la position du corps d'émetteur (1), dans lequel le corps d'émetteur (1) à capacité électroconductrice est disposé entre des selfs stationnaires d'un agencement de bobines différentielles et le circuit d'analyse réagissant à l'impédance des selfs de choc dépendant de la position du corps d'émetteur,
**caractérisé en ce**
**que** les selfs de choc (2', 2") sont disposés électriquement en un montage en série auquel une tension rectangulaire de haute fréquence est appliquée lors du fonctionnement, de sorte que des impulsions de tension alternative de haute fréquence peuvent être prélevées entre des selfs de choc, et en ce que le circuit d'analyse effectue l'analyse d'une différence entre des excursions de tension d'impulsions successives et la transforme en une indication de trajectoire, dans lequel
les excursions de tension sont respectivement détectées avec un retard prescrit par rapport au flanc de départ positif ou négatif des impulsions de tension successives.

2. Indicateur de trajectoire selon la revendication 1,
**caractérisé en ce**
**que**, pour la génération du signal de trajectoire, on effectue respectivement une moyenne et/ou une somme pour un nombre prescrit de différences déterminées.

3. Indicateur de trajectoire selon l'une des revendications 1 et 2,
**caractérisé en ce**
**que** le corps d'émetteur (1) est disposé avec une mobilité en fonction de la force par rapport aux selfs de choc (2', 2").

4. Indicateur de trajectoire selon l'une des revendications 1 à 3,
**caractérisé en ce**
**que** les selfs de choc (2', 2") sont respectivement disposés dans des boîtiers (3) semblables à des pots en matériau magnétisable et avec un noyau de self, formé sur le fond du pot, traversant axialement le self (2', 2") respectif, et en ce que les ouvertures de pot se font face.

5. Indicateur de trajectoire selon la revendication 4,
**caractérisé en ce**
**que** les boîtiers (3) semblables à des pots se composent d'un matériau de ferrite.

6. Indicateur de trajectoire selon l'une des revendications 1 à 5,
**caractérisé en ce**
**que** les selfs de choc (2's, 2") sont disposés coaxialement l'un par rapport à l'autre.

7. Indicateur de trajectoire selon l'une des revendications 1 à 6,
**caractérisé en ce**
**que** le corps d'émetteur (1) est mobile en direction des axes de self.
